# EUROPEAN PATENT SPECIFICATION

(11) **EP 3 738 817 B1**
(45) Date of publication and mention of the grant of the patent: **10.07.2024**
(21) Application number: 18899791.0
(22) Date of filing: 10.08.2018
(51) Int. Cl.: B60L 50/50, H02J 7/00, B60L 53/22

(54) **CHARGING DEVICE FOR DIRECT-CURRENT CHARGING OF ELECTRIC VEHICLE**
LADEVORRICHTUNG FÜR GLEICHSTROMLADUNG EINES ELEKTROFAHRZEUGS
DISPOSITIF DE CHARGE PERMETTANT LA CHARGE EN COURANT CONTINU D'UN VÉHICULE ÉLECTRIQUE

(30) Priority: 09.01.2018 CN 201810019368
(43) Date of publication of application: 18.11.2020
(73) Proprietor: NIO (Anhui) Holding Co., Ltd., Hefei City, Anhui Province (CN)
(72) Inventor: FAN, Jinyan, Shanghai 201804 (CN)
(74) Representative: Patentanwaltskanzlei WILHELM & BECK
(86) International application number: PCT/CN2018/100028
(87) International publication number: WO 2019/136994

(56) References cited:
- WO-A1-2018/192192
- CN-A- 102 208 826
- CN-A- 103 151 476
- CN-A- 105 515 113
- CN-A- 106 985 696
- CN-A- 107 539 151
- CN-U- 205 753 477
- CN-U- 206 426 869
- CN-U- 206 426 869
- JP-A- 2012 080 689
- US-A1- 2012 139 487
- US-A1- 2012 299 531

## Description

### Technical Field

The invention relates to the technical field of electric vehicle charging, and in particular, to a charging device for direct-current (DC) charging of an electric vehicle.

### Background Art

As the consumption of conventional fossil energy causes supply pressure and exhaust gas pollutions, under the general trend of the concepts of environmental protection and clean energy, electric vehicles have less impact on the environment than conventional vehicles, so electric vehicles are developed very fast in recent years. As electric vehicles are popularized, basic charging facilities are essential. As a part of charging infrastructure, charging piles for electric vehicles are of great significance to promote the popularization of electric vehicles. However, charging piles for electric vehicles are usually fixed in one place and cannot be moved. At present, it is difficult to estimate the charge level of a traction battery of an electric vehicle as accurately as the conventional vehicle. Therefore, during the use of the electric vehicle, it is likely that the vehicle stops in the way because the battery runs out.

The charging device for an electric vehicle can supply electric energy for the vehicle and provide rescue against power shortage of the electric vehicle, and allows the vehicle to continue to drive to a nearby charging pile for charging. Therefore, it is an urgent technical problem to develop a simple, portable and practical charging device for an electric vehicle.

CN106985696A discloses a distributed mobile battery charging/swapping vehicle system and an energy storing-type charging pile assembly, comprising a mobile battery charging/swapping vehicle (4) used for charging or swapping batteries for an electric vehicle (2), an energy storing-type charging pile assembly providing battery charging and swapping services, and a control and scheduling platform (5). The energy storing-type charging pile assembly comprises a charging pile (1) and a distributed charging cabinet (3). The charging pile (1) can charge the electric vehicle (2) and can charge the distributed charging cabinet (3) when idle. The distributed charging cabinet (3) can be moved to the mobile battery charging/swapping vehicle (4) when completely charged. The control and scheduling platform (5) monitors the position and state of the charging pile (1), of the distributed charging cabinet (3), of the mobile battery charging/swapping vehicle (4), and of the electric vehicle (2), and allows, by calculation, the service efficiency of the mobile battery charging/swapping vehicle (4) to be maximized and an energy replenishing route to be most economical, thus solving the difficulty in charging the electric vehicle (2) and the problem of a large number of the charging piles (1) idling.

US2012299531A1 relates to charging service vehicles and methods using modular batteries are disclosed. The service vehicles are vehicles having electric vehicle (EV) charging equipment, and removably mounted battery modules or battery module connection points. The battery modules are connected to the EV charging equipment as a source of electrical energy. Some embodiments disclose integrating the EV charging equipment with the vehicle, recharging modules through a distribution grid connection, the manner of discharging the batteries, modes of connecting and disconnecting the modules, the size and weight of the modules, quick-disconnectability of modules, control and monitoring of the modules and charging equipment, and/or ways of connecting modules to the vehicle. These features are beneficial to efficiently keep service vehicles available for EV charging through exchanging battery modules or providing additional battery modules when necessary, and may keep operators safe through de-energization of connectors and other precautions inherent in these designs.

CN205753477U is directed to a movable charging device which comprises a main DC/DC converter unit 120 and an auxiliary DC/DC converter unit 130, the input end of the main DC/DC converter unit 120 is connected with the first charging interface 150 for supplying electric power to the traction battery of the electric vehicle, while the input end of the auxiliary DC/DC converter unit 130 is connected with the output end of the battery cell 110 and the output end of the auxiliary DC/DC converter unit 130 is connected with the second charging interface 160 so as to provide electric power to the BMS (battery management system) of the electric vehicle.

CN206426869U relates to a movable electric automobile charging system, said system includes: alternating current input circuit, rectifying circuit, energy storage battery package, battery management system, direct current charging gun and a plurality of charging interfaces, wherein, alternating current input circuit is connected with the rectifying circuit, the rectifying circuit is connected with the energy storage battery package, the energy storage battery package is connected with one or more direct current charging gun, and the battery management system is connected with the energy storage battery package and the direct current charging gun.

### Summary of the Invention

The invention for which protection is sought is defined by the independent claim. The dependent claims concern particular embodiments.

The technical problem to be solved by the invention is to provide a charging device for direct-current (DC) charging of an electric vehicle, which can provide charging electric energy for a rescued vehicle according to requirements for an driving range after rescue, and integrates two devices for rescue against power shortage of an energy storage battery of an electric vehicle and a battery of an auxiliary power source. The charging device has a compact structure, operates efficiently and improves the user experience.

In order to solve the above technical problems, the invention provides a charging device for DC charging of an electric vehicle, comprising:
a battery module slot for arranging a battery module therein;
the battery module which is removably arranged in the battery module slot and electrically connected to the battery module slot and outputs a voltage to a first DCDC converter;
the first DCDC converter for converting the output voltage of the battery module into a first charging voltage; and
a charging controller for controlling the first DCDC converter to output the first charging voltage and a first charging current for charging a vehicle to be charged.

Further, a connector electrically connected to the battery module slot is arranged inside the battery module slot, the battery module slot is electrically connected to the battery module via the connector, and the battery module is replaced according to requirements for an driving range of the vehicle to be charged.

Further, the charging controller is further configured to acquire charging information of a battery management system (BMS) of a traction battery of the vehicle to be charged and to send a first charging control instruction to the first DCDC converter according to the charging information of the BMS of the traction battery so as to control the first DCDC converter to output the first charging voltage and the first charging current.

Further, the charging controller is further configured to monitor the battery module and to send a power-off control instruction for power-off protection when the battery module is abnormal.

Further, the charging controller detects a cell voltage, a cell temperature, a module voltage and a module current of the battery module in real time, compares the detected values with a corresponding preset range of values, and sends the power-off control instruction if the detected value of any one of the parameters is not within the corresponding preset range.

Further, the charging device further comprises a second DCDC converter which is connected to the battery module and the charging controller and configured to supply power to the BMS of the traction battery of the vehicle to be charged or charge an auxiliary vehicle-mounted power source under the control of the charging controller.

Further, the second DCDC converter has two operating modes: a constant voltage power supply mode and a constant current charging mode;
wherein in the constant voltage power supply mode, the second DCDC converter is configured to receive a constant voltage and current limiting instruction sent by the charging controller, enter a closed voltage loop and convert the output voltage of the battery module into a BMS power supply voltage to supply power to the BMS of the traction battery at a constant voltage; and
in the constant current charging mode, the second DCDC converter is configured to receive the constant voltage and current limiting instruction sent by the charging controller, enter a closed current loop and convert the output voltage of the battery module into a second charging voltage to charge the auxiliary vehicle-mounted power source.

Further, the charging device further comprises a DC charging gun which is connected to the first DCDC converter, the second DCDC converter and the charging controller and is configured to be connected to a charging interface of the vehicle to be charged for charging the vehicle to be charged and supplying power to the BMS of the traction battery of the vehicle to be charged.

Further, the charging device further comprises a power output connector which is connected to the second DCDC converter and is used for connection to the auxiliary vehicle-mounted power source to charge the auxiliary vehicle-mounted power source.

The invention has obvious advantages and beneficial effects as compared with the prior art. By means of the technical solutions above, the charging device for DC charging of an electric vehicle according to the invention can achieve considerable technical progress and practicability, has wide industrial application value, and has at least the following advantages:
(1) the charging device allows for replacement of the battery module, and may provide charging electric energy for a rescued vehicle according to the requirements of subsequent driving range after rescue, so that the economic benefit of the device is improved, and the user experience is also improved.
(2) the second DCDC converter of the charging device has two operating modes, i.e. the constant voltage power supply mode in which power is supplied to the BMS of the traction battery of the vehicle to be charged and the constant current charging mode in which the auxiliary vehicle-mounted power source is charged; and the charging device integrates two devices for rescue against power shortage of an energy storage battery of the electric vehicle and a battery of the auxiliary vehicle-mounted power source. The charging device has a compact structure, operates efficiently and has higher universality.

The description above is only summary of the technical solutions of the invention. In order to understand the technical means of the invention more clearly for implementation according to the contents of the specification, and in order to make the above and other objectives, features and advantages of the invention more apparent and easy to be understood, preferred embodiments are especially taken as examples in conjunction with the accompanying drawings, and the detailed description is as follows.

### Brief Description of the Drawings

Fig. 1 is a schematic diagram of a charging device for DC charging of an electric vehicle according to an embodiment of the invention;
Fig. 2 is a schematic diagram of a switching logic in which a charging controller of the charging device controls an operating mode of a second DCDC converter according to an embodiment of the invention; and
Fig. 3 is a schematic diagram of an operating principle of the second DCDC converter of the charging device according to an embodiment of the invention.

### Description of main reference numerals:

| | | | |
|---|---|---|---|
| 1: | Battery module slot | 2: | Battery module |
| 3: | First DCDC converter | 4: | Charging controller |
| 5: | Second DCDC converter | 6: | DC charging gun |
| 7: | Power output connector | | |

### Detailed Description of Embodiments

In order to further illustrate the technical means and effects adopted by the invention to achieve the intended objectives of the invention, the following is a detailed description of the specific implementation and effects of a charging device for DC charging of an electric vehicle proposed in accordance with the invention with reference to the accompanying drawings and preferred embodiments.

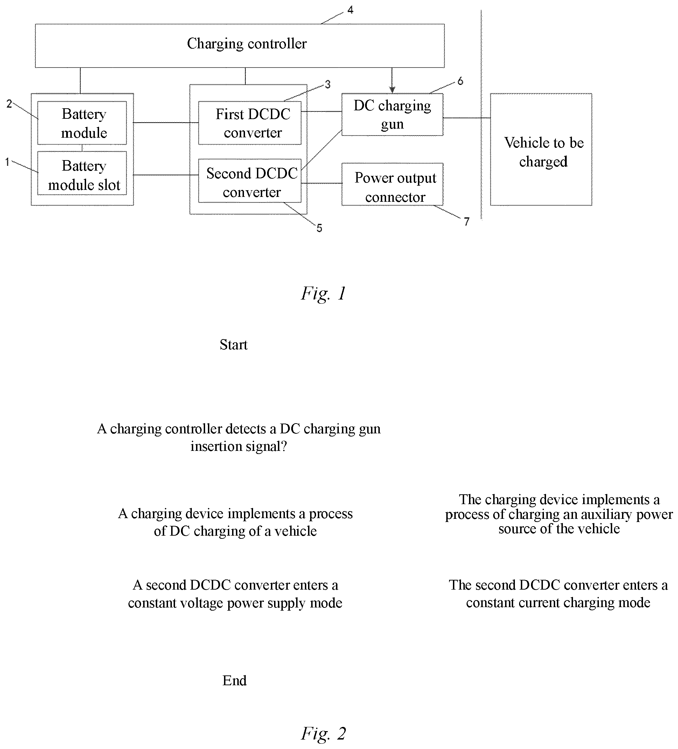

As shown in Fig. 1, an embodiment of the invention provides a charging device for DC charging of an electric vehicle. The charging device comprises a battery module slot 1, a battery module 2, a first DCDC converter 3 and a charging controller 4. The DCDC converter refers to a DC-to-DC converter. The battery module slot 1 is used for arranging the battery module 2 therein. The battery module 2 is removably arranged in the battery module slot 1 and electrically connected to the battery module slot 1, and outputs a voltage to the first DCDC converter 3. The first DCDC converter 3 is configured to convert the output voltage of the battery module 2 into a first charging voltage. The charging controller 4 is configured to control the first DCDC converter 3 to output the first charging voltage and a first charging current, wherein the first charging voltage and the first charging current are used to charge a vehicle to be charged.

It should be noted that the electric vehicle of the invention generally refers to a vehicle that may be powered by a vehicle-mounted power source, is not merely limited to a pure electric vehicle, and may be a hybrid vehicle. The charging device can be used as an independent charging device for vehicle owners to carry for use, or may be disposed on a vehicle for providing charging service as a mobile charging vehicle, etc.

The battery module 2 is a standardized battery module which may be a battery module in a traction battery pack. A connector electrically connected to the battery module slot 1 is arranged inside the battery module slot 1, and the battery module slot 1 may be electrically connected to the battery module 2 via the connector. In addition, in order to achieve the purpose of portability, the weight of the battery module 2 may be set to no more than 15 KG, and has a power capacity of no more than 3 kWh. If a place where the electric vehicle is subjected to power shortage is far away from an available charging pile, or a place where a large charging device can be placed is far away, the battery module 2 can be replaced for more power according to the requirements for a driving range of the vehicle to be charged.

Two embodiments are described below:

### First embodiment

The charging device comprises a battery module slot 1. When a vehicle to be charged needs to drive for 10 km to a target charging pile, which consumes 0.2 kWh per kilometer, the charging device needs to provide at least 2 kWh for the vehicle to be charged. If each battery module 2 contains 1 kWh, at least two battery modules 2 need to be provided to charge the vehicle to be charged. After one of the battery modules 2 is runs out, the battery module is removed from the battery module slot 1, and the other one of the battery modules 2 may be quickly loaded into the battery module slot 1 to continue to charge the vehicle, with no need to replace the battery module slot 1.

### Second embodiment

The charging device comprises a plurality of battery module slots 1. The plurality of battery module slots 1 may be configured to be used separately, or may be configured to be used simultaneously through a group policy. Each of the battery module slots 1 may be provided with one battery module 2. For example, there may be dual battery module slots 1, or three battery module slots 1, or the like. Taking three battery module slots 1 as an example for description, the three battery module slots 1 are a first battery module slot, a second battery module slot and a third battery module slot, respectively.

If a vehicle to be charged needs to drive by 10 km to a target charging pile and consumes 0.3 kWh per kilometer, the charging device needs to provide at least 3 kWh for the vehicle to be charged. If each battery module 2 contains 1 kWh, at least three battery modules 2 need to be provided to charge the vehicle to be charged. In this case, the vehicle to be charged may be charged in two modes:

### First mode

The corresponding battery modules 2 in the first battery module slot, the second battery module slot and the third battery module slot are used one by one to charge the vehicle to be charged, that is, the battery module 2 in the first battery module slot is first used to charge the vehicle to be charged, then the battery module 2 in the second battery module slot is used to charge the vehicle to be charged, and finally the battery module 2 in the third battery module slot is used to charge the vehicle to be charged. There is no need to unplug the battery module 2 during charging.

### Second mode

The first battery module slot, the second battery module slot and the third battery module slot are combined for charging. The three may be all or partially combined. For example, the three battery module slots 1 may be directly combined to charge the vehicle to be charged. As an example, the three may be combined in series. Alternatively, the first battery module slot and the second battery module slot are combined to charge the vehicle to be charged, and then the battery module 2 in the third battery module slot is used to charge the vehicle to be charged, etc. In this process, there is no need to unplug the battery module 2.

It can be seen that the battery module 2 in the charging device of the invention may be replaced, and it can be seen from the above embodiments that the replacement of the battery module 2 is implemented not necessarily by unplugging the battery module 2, and may be implemented by combining and switching between a plurality of battery modules 2. Charging electric energy may be provided for a rescued vehicle according to the requirements of a subsequent driving range after rescue, so that the economic benefit of the device is improved, and the user experience is also improved.

The first DCDC converter 3 may convert the voltage output by the battery module 2 into a voltage suitable for charging the vehicle to be charged, and outputs a corresponding charging current.

The charging controller 4 acquires charging information of a battery management system (BMS) of a traction battery of the vehicle to be charged, specifically including the voltage and current of the traction battery, etc., and sends a first charging control instruction to the first DCDC converter 3 according to the charging information of the BMS of the traction battery so as to control the first DCDC converter 3 to output the first charging voltage and a first charging current.

The charging controller 4 is further connected to the battery module 2 and is configured to monitor the battery module 2 and to send a power-off control instruction for power-off protection when the battery module 2 is abnormal. The charging controller 4 detects a cell voltage, a cell temperature, a module voltage and a module current of the battery module 2 in real time. A corresponding preset range of values is provided for each parameter, and the battery module may operate normally within the preset range value. The charging controller compares the detected values with a corresponding preset range of values and sends a power-off control instruction to make the charging device stop operating if the detected value of any one of the parameters is not within the corresponding preset range, thereby implementing the power-off protection and preventing dangers.

In addition, the charging device further comprises a second DCDC converter 5. The second DCDC converter 5 is connected to the battery module 2 and the charging controller 4 and is configured to supply power to the BMS of the traction battery of the vehicle to be charged or charge an vehicle-mounted power source under the control of the charging controller 4. The charging controller 4 may control the second DCDC converter 5 to operate in a constant voltage power supply mode or in a constant current charging mode. In the constant voltage power supply mode, the second DCDC converter 5 is configured to receive a constant voltage and current limiting instruction sent by the charging controller 4, enter a closed voltage loop and convert the output voltage of the battery module 2 into a BMS power supply voltage to supply power to the BMS of the traction battery at a constant voltage. In the constant current charging mode, the second DCDC converter 5 is configured to receive the constant voltage and current limiting instruction sent by the charging controller 4, enter a closed current loop, and convert the output voltage of the battery module 2 into a second charging voltage to charge the auxiliary vehicle-mounted power source. The auxiliary vehicle-mounted power source may be a 12 V vehicle-mounted lead-acid battery.

The switching logic in which the charging controller 4 controls an operating mode of the second DCDC converter 5 is shown in Fig. 2. After being powered on, the charging controller 4 detects whether a DC charging gun insertion signal is received; if yes, the charging controller controls the charging device to implement a vehicle DC charging process, and sends the constant voltage and current limiting instruction to the second DCDC converter 5, such that the second DCDC converter 5 enters the constant voltage power supply mode. Otherwise, the charging controller controls the charging device to implement the process of charging the auxiliary power source of the vehicle, and sends the constant current and voltage limiting instruction to the second DCDC converter 5, such that the second DCDC converter 5 enters the constant current charging mode.

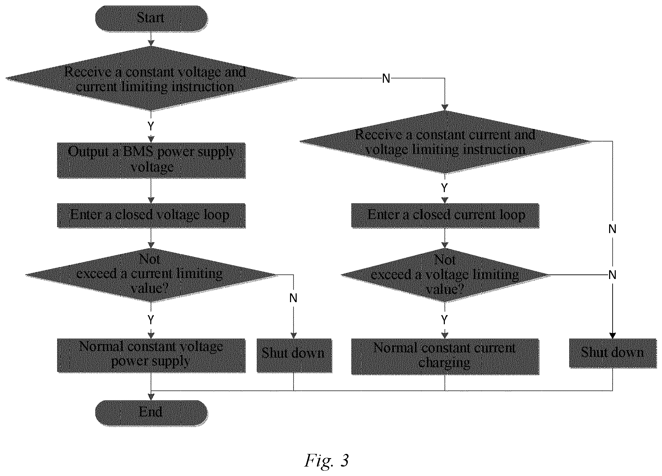

The schematic diagram of an operating principle of the second DCDC converter 5 is shown in Fig. 3. If receiving the constant voltage and current limiting instruction, the second DCDC converter 5 enters the closed voltage loop, converts the output voltage of the battery module 2 into the BMS power supply voltage to supply power to the BMS of the traction battery at a constant voltage. After entering the closed voltage loop, the current value of the second DCDC converter 5 further needs to be monitored in real time. If the current value does not exceed a preset current limiting value, power is continuously supplied to the BMS of the traction battery of the vehicle at a constant voltage, otherwise the charging device enters a shutdown state to ensure that the charging device is in a safe operating state. If receiving the constant current and voltage limiting instruction, the second DCDC converter 5 enters the closed current loop and converts the output voltage of the battery module 2 into a second charging voltage to charge the auxiliary vehicle-mounted power source. After entering the closed current loop, the voltage value of the second DCDC converter 5 may be continuously monitored. If the voltage value does not exceed a preset voltage limiting value, the auxiliary vehicle-mounted power source is continuously charged, otherwise the charging device enters the shutdown state to ensure that the charging device is in the safe operating state.

The charging device further comprises a power output connector 7 which is connected to the second DCDC converter 5. When the charging device is used to charge the auxiliary vehicle-mounted power source, the second DCDC converter 5 is connected to the auxiliary vehicle-mounted power source and charges the auxiliary vehicle-mounted power source. The charging device can not only charge the auxiliary vehicle-mounted power source of the electric vehicle, but also charge an auxiliary vehicle-mounted power source of a conventional fossil energy vehicle for rescue for the auxiliary power source of the vehicle.

The charging device further comprises a DC charging gun 6 which is connected to the first DCDC converter 3, the second DCDC converter 5 and the charging controller 4 and is configured to be connected to a charging interface of the vehicle to be charged for charging the vehicle to be charged and supplying power to the BMS of the traction battery of the vehicle to be charged. The DC charging gun 6 may be a China standard charging gun, an American standard DC charging gun, or an European standard DC charging gun, etc. The electric vehicle is charged by the DC charging gun 6, which further improves the universality of the charging device.

A process in which the charging device according to the embodiments of the invention performs DC charging of the vehicle comprises:
a step 11 of inserting the battery module 2 into the battery module slot 1 and connecting the DC charging gun 6 to a charging port of the vehicle;
a step 12 of powering on the charging controller 4, receiving a start instruction and detecting whether a DC charging gun insertion signal is received, and if yes, sending the constant voltage and current limiting instruction to the second DCDC converter 5;
a step 13 of supplying, by the second DCDC converter 5, power to the BMS of the traction battery of the vehicle to be charged;
a step 14 of acquiring, by the charging controller 4, a charging demand from the BMS of the traction battery and sending a control instruction to the first DCDC converter 3 according to the charging demand; and
a step 15 of converting, by the first DCDC converter 3, the voltage output by the battery module 2 into the first charging voltage according to the received control instruction and outputting the first charging voltage and the first charging current to the DC charging gun for charging the vehicle.

A process in which the charging device according to the embodiments of the invention charges the auxiliary power source of the vehicle comprises:
a step 21 of inserting the battery module 2 into the battery module slot 1 and connecting the power output connector 7 to the auxiliary power source of the vehicle;
a step 22 of powering on the charging controller 4, receiving a start instruction and detecting whether a DC charging gun insertion signal is received, and if not, proceeding to a step 23;
the step 23 of sending, by the charging controller 4, the constant current and voltage limiting instruction to the second DCDC converter 5; and
a step 24 of converting, by the second DCDC converter 5, the voltage output by the battery module 2 into the second charging voltage and outputting the second charging voltage and the second charging current to the power output connector 7 for charging the auxiliary power source of the vehicle.

The charging device according to the embodiments of the invention allows for replacement of the battery module 2, and may provide charging electric energy for a rescued vehicle according to the requirements of subsequent driving range after rescue, so that the economic benefit of the device is improved, and the user experience is also improved. The second DCDC converter 5 of the charging device has two operating modes, i.e. the constant voltage power supply mode in which power is supplied to the BMS of the traction battery of the vehicle to be charged and the constant current charging mode in which the auxiliary vehicle-mounted power source is charged; and the charging device integrates two devices for rescue against power shortage of an energy storage battery of the the electric vehicle and a battery of the auxiliary vehicle-mounted power source. The charging device has a compact structure, operates efficiently and has higher universality.

## Claims

1. A charging device for direct-current, hereafter referred to as DC, charging of an electric vehicle, comprising:
a battery module slot (1) for arranging a battery module (2) therein;
the battery module (2) which is removably arranged in the battery module slot (1) and electrically connected to the battery module slot (1) and outputs a voltage to a first DCDC converter (3);
the first DCDC converter (3) for converting the output voltage of the battery module (2) into a first charging voltage; and
a charging controller (4) for controlling the first DCDC converter (3) to output the first charging voltage and a first charging current for charging a vehicle to be charged, **characterized in that**
the charging device further comprises a second DCDC converter (5) which is connected to the battery module (2) and the charging controller (4) and is configured to be capable of supplying power to the battery management system, hereafter referred to as BMS, of the traction battery of the vehicle to be charged or charge an auxiliary vehicle-mounted power source under the control of the charging controller (4),
the second DCDC converter (5) having two operating modes: a constant voltage power supply mode and a constant current charging mode, wherein in the constant voltage power supply mode, the second DCDC converter (5) is configured to receive a constant voltage and current limiting instruction sent by the charging controller (4), enter a closed voltage loop and convert the output voltage of the battery module into a BMS power supply voltage capable of supplying power to the BMS of the traction battery at a constant voltage; and in the constant current charging mode, the second DCDC converter (5) is configured to receive the constant voltage and current limiting instruction sent by the charging controller (4), enter a closed current loop and convert the output voltage of the battery module into a second charging voltage capable of charging the auxiliary vehicle-mounted power source.

2. The charging device for DC charging of an electric vehicle according to claim 1, **characterized in that**
a connector electrically connected to the battery module slot (1) is arranged inside the battery module slot (1), the battery module slot (1) is electrically connected to the battery module (2) via the connector, and the battery module is replaced according to requirements for an driving range of the vehicle to be charged.

3. The charging device for DC charging of an electric vehicle according to claim 1, **characterized in that**
the charging controller (4) is further configured to acquire charging information of a battery management system (BMS) of a traction battery of the vehicle to be charged and to send a first charging control instruction to the first DCDC converter (3) according to the charging information of the BMS of the traction battery so as to control the first DCDC converter (3) to output the first charging voltage and the first charging current.

4. The charging device for DC charging of an electric vehicle according to claim 1, **characterized in that**
the charging controller (4) is further configured to monitor the battery module (2) and to send a power-off control instruction for power-off protection when the battery module (2) is abnormal.

5. The charging device for DC charging of an electric vehicle according to claim 4, **characterized in that**
the charging controller detects a cell voltage, a cell temperature, a module voltage and a module current of the battery module (2) in real time, compares the detected values with a corresponding preset range of values, and sends the power-off control instruction if the detected value of any one of the parameters is not within the corresponding preset range.

6. The charging device for DC charging of an electric vehicle according to claim 1, **characterized in that**
the charging device (4) further comprises a DC charging gun (6) which is connected to the first DCDC converter (3), the second DCDC converter (5) and the charging controller (4) and is configured to be connected to a charging interface of the vehicle to be charged for charging the vehicle to be charged and supplying power to the BMS of the traction battery of the vehicle to be charged.

7. The charging device for DC charging of an electric vehicle according to claim 1, **characterized in that**
the charging device further comprises a power output connector (7) which is connected to the second DCDC (5) converter and is used for connection to the auxiliary vehicle-mounted power source to charge the auxiliary vehicle-mounted power source.

## Patentansprüche

1. Ladevorrichtung für Gleichstromladung, im Folgenden als DC-Ladung bezeichnet, eines Elektrofahrzeugs, die Folgendes umfasst:
einen Batteriemodulsteckplatz (1) zum Anordnen eines Batteriemoduls (2) darin;
das Batteriemodul (2), das entfernbar im Batteriemodulsteckplatz (1) angeordnet ist und mit dem Batteriemodulsteckplatz (1) elektrisch verbunden ist und eine Spannung an einen ersten DC/DC-Wandler (3) ausgibt;
den ersten DC/DC-Wandler (3) zum Umwandeln der Ausgangsspannung des Batteriemoduls (2) in eine erste Ladespannung; und
eine Ladesteuerung (4) zum Steuern des ersten DC/DC-Wandlers (3) zum Ausgeben der ersten Ladespannung und eines ersten Ladestroms zum Laden eines zu ladenden Fahrzeugs, **dadurch gekennzeichnet, dass**
die Ladevorrichtung ferner einen zweiten DC/DC-Wandler (5) umfasst, der mit dem Batteriemodul (2) und der Ladesteuerung (4) verbunden ist und dazu ausgelegt ist, in der Lage zu sein, Leistung zum Batterieverwaltungssystem, im Folgenden als BMS bezeichnet, der Antriebsbatterie des zu ladenden Fahrzeugs zuzuführen oder eine zusätzliche, im Fahrzeug montierte Leistungsquelle unter Steuerung der Ladesteuerung (4) zu laden,
der zweite DC/DC-Wandler (5) zwei Betriebsmodi aufweist: einen Konstantspannungs-Leistungsversorgungsmodus und einen Konstantstrom-Lademodus, wobei im Konstantspannungs-Leistungsversorgungsmodus der zweite DC/DC-Wandler (5) ausgelegt ist zum Empfangen einer Konstantspannungs- und -strombegrenzungsanweisung, gesendet durch die Ladesteuerung (4), Eintreten in eine geschlossene Spannungsschleife und Umwandeln der Ausgangsspannung des Batteriemoduls in eine BMS-Leistungsversorgungsspannung, die in der Lage ist, Leistung zum BMS der Antriebsbatterie bei einer konstanten Spannung zuzuführen; und wobei im Konstantstrom-Lademodus der zweite DC/DC-Wandler (5) ausgelegt ist zum Empfangen der Konstantspannungs- und - strombegrenzungsanweisung, gesendet durch die Ladesteuerung (4), Eintreten in eine geschlossene Stromschleife und Umwandeln der Ausgangsspannung des Batteriemoduls in eine zweite Ladespannung, die in der Lage ist, die zusätzliche im Fahrzeug montierte Leistungsquelle zu laden.

2. Ladevorrichtung für DC-Ladung eines Elektrofahrzeugs nach Anspruch 1, **dadurch gekennzeichnet, dass**
ein Steckverbinder, der mit dem Batteriemodulsteckplatz (1) elektrisch verbunden ist, im Inneren des Batteriemodulsteckplatzes (1) angeordnet ist, wobei der Batteriemodulsteckplatz (1) über den Steckverbinder mit dem Batteriemodul (2) elektrisch verbunden ist, und wobei das Batteriemodul entsprechend den Anforderungen für eine Fahrreichweite des zu ladenden Fahrzeugs ersetzt wird.

3. Ladevorrichtung für DC-Ladung eines Elektrofahrzeugs nach Anspruch 1, **dadurch gekennzeichnet, dass**
die Ladesteuerung (4) ferner ausgelegt ist zum Erfassen von Ladeinformationen eines Batterieverwaltungssystems (BMS) einer Antriebsbatterie des zu ladenden Fahrzeugs und Senden einer ersten Ladesteuerungsanweisung an den ersten DC/DC-Wandler (3) entsprechend den Ladeinformationen des BMS der Antriebsbatterie, um den ersten DC/DC-Wandler (3) zu steuern, um die erste Ladespannung und den ersten Ladestrom auszugeben.

4. Ladevorrichtung für DC-Ladung eines Elektrofahrzeugs nach Anspruch 1, **dadurch gekennzeichnet, dass**
die Ladesteuerung (4) ferner ausgelegt ist zum Überwachen des Batteriemoduls (2) und zum Senden einer Ausschaltsteuerungsanweisung für Ausschaltschutz, wenn das Batteriemodul (2) abnormal ist.

5. Ladevorrichtung für DC-Ladung eines Elektrofahrzeugs nach Anspruch 4, **dadurch gekennzeichnet, dass**
die Ladesteuerung eine Zellenspannung, eine Zellentemperatur, eine Modulspannung und einen Modulstrom des Batteriemoduls (2) in Echtzeit detektiert, die detektierten Werte mit einem entsprechenden voreingestellten Bereich von Werten vergleicht und die Ausschaltsteuerungsanweisung sendet, wenn der detektierte Wert eines beliebigen der Parameter nicht innerhalb des entsprechenden voreingestellten Bereichs ist.

6. Ladevorrichtung für DC-Ladung eines Elektrofahrzeugs nach Anspruch 1, **dadurch gekennzeichnet, dass**
die Ladevorrichtung (4) ferner eine DC-Ladepistole (6) umfasst, die mit dem ersten DC/DC-Wandler (3), dem zweiten DC/DC-Wandler (5) und der Ladesteuerung (4) verbunden ist und dazu ausgelegt ist, mit einer Ladeschnittstelle des zu ladenden Fahrzeugs verbunden zu werden, um das zu ladende Fahrzeug zu laden und Leistung zum BMS der Antriebsbatterie des zu ladenden Fahrzeugs zuzuführen.

7. Ladevorrichtung für DC-Ladung eines Elektrofahrzeugs nach Anspruch 1, **dadurch gekennzeichnet, dass**
die Ladevorrichtung ferner einen Leistungsausgangsverbinder (7) umfasst, der mit dem zweiten DC/DC-Wandler (5) verbunden ist und verwendet wird zur Verbindung mit der zusätzlichen im Fahrzeug montierten Leistungsquelle zum Laden der zusätzlichen im Fahrzeug montierten Leistungsquelle.

## Revendications

1. Dispositif de charge pour une charge en courant continu, appelé ici CC, d'un véhicule électrique, comprenant :
une fente de module de batterie (1) pour disposer à l'intérieur un module de batterie (2) ;
le module de batterie (2) qui est disposé de façon amovible dans la fente de module de batterie (1) et est connecté électriquement à la fente de module de batterie (1) et délivre une tension vers un premier convertisseur CC-CC (3) ;
le premier convertisseur CC-CC (3) pour convertir la tension de sortie du module de batterie (2) en une première tension de charge ; et
un dispositif de commande de charge (4) pour commander le premier convertisseur CC-CC (3) pour délivrer la première tension de charge et un premier courant de charge pour charger un véhicule à charger, **caractérisé en ce que**
le dispositif de charge comprend en outre un second convertisseur CC-CC (5) qui est connecté au module de batterie (2) et au dispositif de commande de charge (4) et est configuré pour pouvoir alimenter le système de gestion de batterie, appelé ici BMS, de la batterie de traction du véhicule à charger ou charger une source d'alimentation auxiliaire embarquée sous la commande du dispositif de commande de charge (4),
le second convertisseur CC-CC (5) ayant deux modes de fonctionnement : un mode d'alimentation à tension constante et un mode de charge à courant constant, dans lequel dans le mode d'alimentation à tension constante, le second convertisseur CC-CC (5) est configuré pour recevoir une tension constante et une instruction de limitation de courant envoyée par le dispositif de commande de charge (4), entrer dans une boucle de tension fermée et convertir la tension de sortie du module de batterie en une tension d'alimentation de BMS pouvant alimenter le BMS de la batterie de traction à une tension constante ; et dans le mode de charge à courant constant, le second convertisseur CC-CC (5) est configuré pour recevoir la tension constante et l'instruction de limitation de courant envoyées par le dispositif de commande de charge (4), entrer dans une boucle de courant fermée et convertir la tension de sortie du module de batterie en une seconde tension de charge pouvant charger la source d'alimentation auxiliaire embarquée.

2. Dispositif de charge pour une charge CC d'un véhicule électrique selon la revendication 1, **caractérisé en ce que**
un connecteur électriquement connecté à la fente de batterie de module (1) est disposé à l'intérieur de la fente de batterie de module (1), la fente de batterie de module (1) est connectée électriquement au module de batterie (2) par le biais du connecteur, et le module de batterie est remplacé en fonction d'exigences d'une plage d'entraînement du véhicule à charger.

3. Dispositif de charge pour une charge CC d'un véhicule électrique selon la revendication 1, **caractérisé en ce que**
le dispositif de commande de charge (4) est en outre configuré pour acquérir des informations de charge d'un système de gestion de batterie (BMS) d'une batterie de traction du véhicule à charger et pour envoyer une première instruction de commande de charge au premier convertisseur CC-CC (3) en fonction des informations de charge du BMS de la batterie de traction de façon à amener le premier convertisseur CC-CC (3) à délivrer la première tension de charge et le premier courant de charge.

4. Dispositif de charge pour une charge CC d'un véhicule électrique selon la revendication 1, **caractérisé en ce que**
le dispositif de commande de charge (4) est en outre configuré pour surveiller le module de batterie (2) et pour envoyer une instruction de commande de mise hors tension pour une protection hors tension lorsque le module de batterie (2) est anormal.

5. Dispositif de charge pour une charge CC d'un véhicule électrique selon la revendication 4, **caractérisé en ce que**
le dispositif de commande de charge détecte une tension d'élément, une température d'élément, une tension de module et un courant de module du module de batterie (2) en temps réel, compare les valeurs détectées à une plage prédéfinie correspondante de valeurs, et envoie l'instruction de commande de mise hors tension si la valeur détectée de l'un quelconque des paramètres ne se trouve pas dans la plage prédéfinie correspondante.

6. Dispositif de charge pour une charge CC d'un véhicule électrique selon la revendication 1, **caractérisé en ce que**
le dispositif de charge (4) comprend en outre un pistolet de charge CC (6) qui est connecté au premier convertisseur CC-CC (3), au second convertisseur CC-CC (5) et au dispositif de commande de charge (4) et est configuré pour être connecté à une interface de charge du véhicule à charger pour charger le véhicule à charger et alimenter le BMS de la batterie de traction du véhicule à charger.

7. Dispositif de charge pour une charge CC d'un véhicule électrique selon la revendication 1, **caractérisé en ce que**
le dispositif de charge comprend en outre un connecteur de sortie d'alimentation (7) qui est connecté au second convertisseur CC-CC (5) et est utilisé pour la connexion à la source d'alimentation auxiliaire embarquée pour charger la source d'alimentation auxiliaire embarquée.
